**Europäisches Patentamt**

**European Patent Office**

**Office européen des brevets**

(19)

(11) Numéro de publication : **0 026 845**
**B1**

(12) **FASCICULE DE BREVET EUROPÉEN**

(45) Date de publication du fascicule du brevet :
15.08.84

(21) Numéro de dépôt : **80105264.8**

(22) Date de dépôt : **04.09.80**

(51) Int. Cl.³ : **H 01 M   4/58, H 01 M   10/40,**
**H 01 M   4/02, C 01 G   1/12**

(54) **Générateur électrochimique à électrolyte non-aqueux et procédé de fabrication.**

(30) Priorité : 11.09.79 FR 7922643

(43) Date de publication de la demande :
15.04.81 Bulletin 81/15

(45) Mention de la délivrance du brevet :
15.08.84 Bulletin 84/33

(84) Etats contractants désignés :
AT BE CH DE FR GB IT LI LU NL SE

(56) Documents cités :
FR-A- 2 154 533
FR-A- 2 243 528
FR-A- 2 277 898
FR-A- 2 381 395
FR-A- 2 381 396

(73) Titulaire : **COMPAGNIE GENERALE D'ELECTRICITE**
**Société anonyme dite:**
**54, rue La Boétie**
**F-75382 Paris Cedex 08 (FR)**

(72) Inventeur : **le Mehaute, Alain**
**69, rue Juliette Adam**
**F-91190 Gif Sur Yvette (FR)**
Inventeur : **Rouxel, Jean**
**39, rue de la Pavotière**
**F-44300 Nantes (FR)**
Inventeur : **Le Blanc-Soreau, Annie**
**Rue des pas perdus**
**F-44240 La Chapelle S/Erdre (FR)**

(74) Mandataire : **Weinmiller, Jürgen et al**
**Zeppelinstrasse 63**
**D-8000 München 80 (DE)**

## Description

La présente invention concerne un générateur électrochimique à électrolyte non aqueux éventuellement rechargeable.

On connaît des générateurs électrochimiques dans lesquels l'électrode positive comporte un composé dit à insertion ou à intercalation dans lequel s'insère au cours de la décharge, la matière active négative, généralement un métal alcalin. De tels composés sont par exemple des chalcogénures tels que des sulfures de titane ou du phosphosulfure de nickel, des sulfures mixtes, par exemple de bismuth ou de plomb ou de cuivre, ou des oxyhalogénures de métaux de transition, par exemple FeOCl.

De tels générateurs peuvent subir un nombre élevé de cycles charge-décharge et ils sont aptes en outre à délivrer une densité d'énergie élevée. Dans le but d'améliorer encore les performances de générateurs de ce type, on a recherché des composés pouvant être mis en œuvre en tant que matière active à l'électrode positive.

On a constaté que certains composés présentant une structure du type thiospinelle ou olivine étaient précisément aptes à intercaler dynamiquement la matière active négative, et à permettre la réalisation de générateurs électrochimiques éventuellement rechargeables présentant d'excellentes performances.

Un tel générateur peut être indifféremment fabriqué à l'état chargé ou à l'état déchargé.

L'invention a pour objet un générateur électrochimique du type comportant une électrode positive, dont la matière active est apte à intercaler dynamiquement la matière active négative, une électrode négative dont la matière active comporte au moins un métal alcalin, et un électrolyte non aqueux, caractérisé par le fait que ladite électrode positive comporte au moins un composé de formule générale $MX_4R_nT_p$ dans laquelle M représente un élément choisi parmi le silicium, le germanium, l'étain et le plomb, X représente le soufre, le sélénium ou le tellure, R et T représentent un élément choisi parmi le cuivre, l'argent, le manganèse, le fer, le cobalt et le nickel, n étant supérieur ou égal à 0 et inférieur ou égal à 4, p étant supérieur ou égal à 0 et inférieur ou égal à 2.

Les composés préférés sont les suivants :

$$Fe_2SiS_4, \ Fe_2GeS_4, \ Cu_2Fe_2SnS_4, \ Fe_2SnS_4,$$
$$Cu_2MnSnS_4, \ Cu_4SnS_4.$$

L'électrode peut également comporter un mélange desdits composés.

Un tel composé peut être utilisé soit seul, s'il est suffisamment bon conducteur électronique, soit dans le cas contraire, déposé sur un support conducteur ou mélangé à des poudres électroniquement conductrices telles que le carbone, le graphite.

Le procédé de fabrication de tels composés est le suivant :

Les matériaux sont préparés à partir des éléments purs pulvérulents mélangés en proportions stœchiométriques puis placés dans des ampoules de silice scellées sous vide.

Après une montée en température de 50 °C par jour, les ampoules sont maintenues à 750 °C pendant 1 semaine puis refroidies à raison de 50 °C par jour jusqu'à la température ambiante.

Lorsque le générateur est monté à l'état chargé, les matières actives sont insérées dans le générateur sous la forme obtenue par la méthode décrite ci-dessus. Lorsque le générateur est monté à l'état déchargé, la matière active de l'électrode négative est préalablement insérée dans la matière active positive, par exemple, par la technique connue consistant à mettre en contact pendant environ 24 heures le composé avec un organo-alcalin tel que du butyl-lithium en enceinte fermée à faible teneur en eau. L'avantage d'un tel procédé par rapport à celui du montage à l'état chargé réside dans le fait qu'une telle insertion est plus stable dans les conditions atmosphériques que la matière active négative seule qui comporte un métal alcalin, ce qui évite par la suite de mettre en œuvre un procédé de fabrication sous atmosphère à très faible teneur en eau et en oxygène. Néanmoins un tel processus qui est effectué à partir de techniques déjà connues au butyl-lithium ou en solution dans l'ammoniac liquide doit se faire sous atmosphère contrôlée.

L'électrode négative comporte comme matière active au moins un métal alcalin.

Une telle matière active négative peut être utilisée pure ou dispersée dans une substance telle que ledit élément puisse se trouver ionisé ultérieurement.

Ledit métal peut être sous forme d'alliage, en particulier d'alliage d'aluminium.

Dans le cas du montage à l'état chargé la matière active négative peut être déposée sur un support conducteur par exemple en cuivre, en nickel, et cela par toute technique appropriée.

Lorsque le générateur est monté à l'état déchargé, il suffira de disposer dans le générateur un collecteur constitué d'un support inerte dans le milieu, par exemple en cuivre, en fer, en nickel. Lors de la première charge le métal préalablement inséré dans la matière active positive se déposera sur le collecteur négatif.

L'électrolyte peut comporter un composé soit à l'état pur, soit en solution dans un solvant convenable.

Le porteur ionique de cet électrolyte est, en règle générale, le cation de l'élément constituant la matière active négative, l'anion étant un halogénure, un sulfate, un nitrate, un perchlorate, un phosphohalogénure ou autre.

A titre d'exemple l'électrolyte est $LiPF_6$, $LiClO_4$, ou LiI.

En tant que solvants utilisables, citons le carbonate de propylène, le dioxolanne, le diméthoxyéthane, le nitrométhane, le tétrahydrofuranne, et de façon générale les ethers et esters cycliques.

Bien entendu la concentration de l'électrolyte est prédéterminée en fonction de la conductivité et de sa réactivité.

L'invention sera décrite ci-après plus en détail à l'aide d'exemples de mise en œuvre et en référence aux dessins annexés dans lesquels :

La figure 1 représente un générateur électrochimique selon l'invention,

La figure 2 illustre les caractéristiques électrochimiques de générateurs selon l'invention.

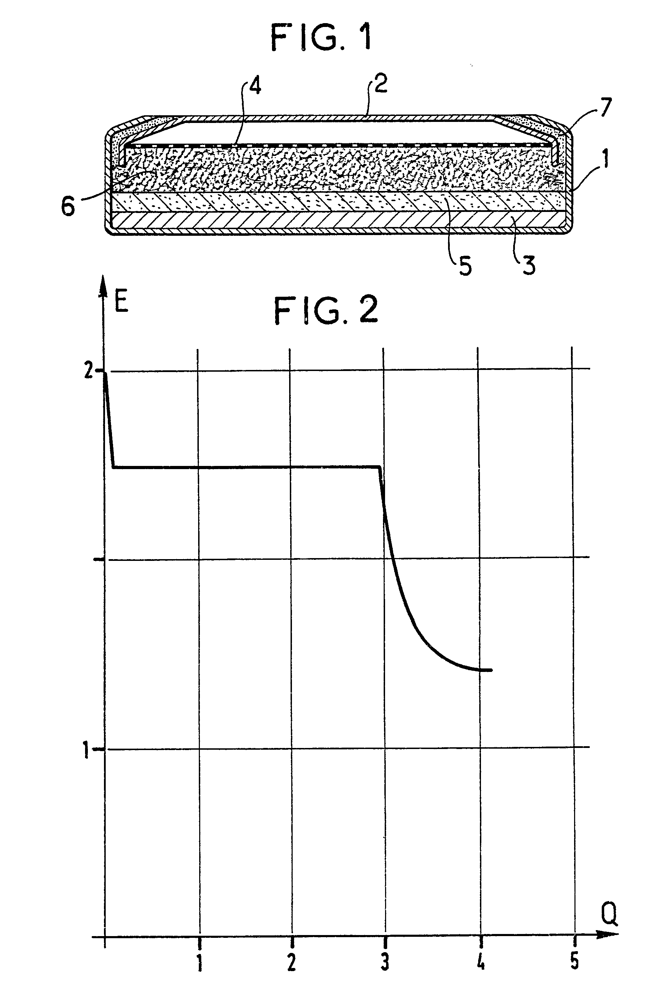

La figure 1 illustre un mode de réalisation pratique d'un générateur selon l'invention, les dimensions, notamment l'épaisseur des divers constituants ayant été volontairement exagérées.

On voit un boîtier extérieur 1 dans lequel s'emboîte par compression, un boîtier intérieur 2. Une cale 3 est disposée dans le fond du boîtier 1. A la partie supérieure du boîtier 2 est disposée une grille 4 jouant le rôle de collecteur négatif sur lequel est disposé du lithium. Les boîtiers, la grille ainsi que la cale sont réalisés par exemple en acier inoxydable.

Sur la cale 3 est disposée une première couche 5 de la matière active positive, séparée de l'électrode négative 4 par un séparateur 6 imprégné de l'électrolyte.

Enfin, un joint de polyéthylène 7 assure l'étanchéité de l'ensemble.

Dans les exemples qui suivent, la matière active broyée après fabrication est disposée dans le boîtier 1 sur la cale 3 de telle manière que la masse soit voisine de 0,200 g. Cette matière est ensuite comprimée lentement sous 1 000 kg. Le volume du boîtier est 0,25 cm³ environ.

Des essais ont également été exécutés suivant deux autres technologies consistant, d'une part, à déposer par projection au pistolet sur la cale 3 une faible masse de matière active positive, environ 0,020 g, en suspension dans une émulsion de téflon, d'autre part à fabriquer l'électrode positive de la manière suivante :

La matière active à l'état de fine poudre est dispersée dans une émulsion de polytétrafluoréthylène (PTFE) ou toute autre matière telle qu'un copolymère fluoré d'éthylène et de propylène, en proportions pondérales de 85 à 95 % de matière active pour 15 à 5 % de PTFE. On ajoute ensuite du graphite ou du noir d'acétylène afin d'augmenter la conductivité électronique.

On précipite ensuite l'émulsion par l'alcool de façon à former une masse consolidée que l'on comprime sur une grille de nickel ou de cuivre. On peut aussi former un gel, par exemple par dissolution de polyvinyl formal dans un solvant tel que le carbonate de propylène. On mélange ensuite la matière active au gel formé.

A titre d'exemple de réalisation, le composé de formule $Fe_2SnS_4$ a été préparé conformément à la méthode précédemment décrite. Après broyage, on ajoute à ce produit du graphite de granulométrie 2 microns et du noir d'acétylène en proportions pondérales respectives de 30 % et 10 %. La poudre ainsi obtenue de granulométrie de 30 microns est utilisée pour réaliser un générateur du type bouton, à la manière précédemment décrite.

La figure 2 illustre la courbe de décharge d'un tel générateur sous une intensité de 40 microampères. Plus précisément cette courbe indique la variation de la force électromotrice E en volts en fonction de la quantité d'électricité Q exprimée en Faraday par mole de substance active positive. Des générateurs similaires ont été réalisés, mais en utilisant comme substances actives positives les composés précédemment énumérés.

L'invention est mise en œuvre dans les générateurs électrochimiques du type bouton qui peuvent ou ne peuvent pas être rechargés.

## Revendications

1. Générateur électrochimique du type comportant une électrode positive, dont la matière active (5) est apte à intercaler dynamiquement la matière active négative, une électrode négative dont la matière active comporte au moins un métal alcalin, et un électrolyte non aqueux (6) caractérisé par le fait que ladite électrode positive comporte au moins un composé de formule générale $MX_4R_nT_p$ dans laquelle M représente un élément choisi parmi le silicium, le germanium, l'étain et le plomb, X représente le soufre, le sélénium ou le tellure, R et T représentent un élément choisi parmi le cuivre, l'argent, le manganèse, le fer, le cobalt et le nickel, n étant supérieur ou égal à 0 et inférieur ou égal à 4, p étant supérieur ou égal à 0 et inférieur ou égal à 2.

2. Générateur selon la revendication 1, caractérisé par le fait que ledit composé est choisi dans le groupe comportant $Fe_2SiS_4$, $Fe_2GeS_4$, $Cu_2Fe_2SnS_4$, $Fe_2SnS_4$, $Cu_2MnSnS_4$, $Cu_4SnS_4$, et leurs mélanges.

3. Générateur selon l'une des revendications 1 ou 2, caractérisé par le fait que ledit composé est disposé sur un support conducteur.

4. Générateur selon l'une des revendications 1 ou 2, caractérisé par le fait que ledit composé est mélangé à une poudre conductrice comportant un corps choisi parmi le noir d'acétylène, le graphite ou leurs mélanges.

5. Générateur selon l'une des revendications précédentes, caractérisé par le fait que ledit métal alcalin est le lithium.

6. Générateur selon la revendication 5, caractérisé par le fait que la matière active négative est déposée sur un support conducteur, de préférence en cuivre ou en nickel.

7. Générateur selon l'une des revendications précédentes, caractérisé par le fait que ledit électrolyte comporte un porteur ionique dissous dans un solvant.

8. Générateur selon la revendication 7, caractérisé par le fait que le cation dudit porteur ionique est le cation de l'élément de l'électrode négative, l'anion étant de préférence un halogénure, un sulfate, un nitrate, un perchlorate, un phosphohalogénure.

9. Générateur selon la revendication 7, caractérisé par le fait que ledit solvant est choisi dans le groupe comportant le carbonate de propylène, le dioxolanne, le diméthoxyéthane, le nitrométhane, le tétrahydrofuranne, et parmi les éthers et esters cycliques et leurs mélanges.

10. Procédé de fabrication d'un générateur selon l'une des revendications 1 à 9, caractérisé par le fait qu'en vue d'obtenir l'électrode positive l'on disperse dans une émulsion de polytétrafluoréthylène, ledit composé en poudre à raison de 15 à 5 % et 85 à 95 % en poids respectivement, on ajoute de l'alcool à l'émulsion pour former un composé consolidé, on comprime ce composé sur ledit support conducteur.

11. Procédé de fabrication d'un générateur selon l'une des revendications 1 à 9, caractérisé par le fait qu'en vue de la fabrication de l'électrode positive l'on forme un gel par mélange dudit composé avec le polyvinyl formal en solution dans le carbonate de propylène.

## Claims

1. An electrochemical generator of the type which includes a positive electrode whose active material (5) is suitable for dynamically inserting the negative active material, a negative electrode whose active material includes at least one alkali metal, and a non-aqueous electrolyte (6), characterized in that said positive electrode comprises at least one compound whose general formula is $MX_4R_nT_p$, where M represents an element chosen from among silicon, germanium, tin and lead, X represents sulphur, selenium or tellurium, R and T represent an element chosen from among copper, silver, manganese, iron, cobalt and nickel, n being greater than or equal to 0 and less than or equal to 4, p being greater than or equal to 0 and less than or equal to 2.

2. A generator according to claim 1, characterized in that said compound is chosen from the group which consists of $Fe_2SiS_4$, $Fe_2GeS_4$, $Cu_2Fe_2SnS_4$, $Fe_2SnS_4$, $Cu_2MnSnS_4$, $Cu_4SnS_4$ and mixtures thereof.

3. A generator according to claim 1 or 2, characterized in that said compound is disposed on a conductive support.

4. A generator according to claim 1 or 2, characterized in that said compound is mixed with a conductive powder which includes a substance chosen from the group consisting of acetylene black, graphite and mixtures thereof.

5. A generator according to one of the preceding claims, characterized in that said alkali metal is lithium.

6. A generator according to claim 5, characterized in that the negative active material is deposited on a conductive support, preferably made of copper or nickel.

7. A generator according to one of the preceding claims, characterized in that said electrolyte comprises a ionic carrier dissolved in a solvent.

8. A generator according to claim 7, characterized in that the cation of said ionic carrier is the cation of the element of the negative electrode, the anion being preferably a halide, a sulphate, a nitrate, a perchlorate or a phosphohalide.

9. A generator according to claim 7, characterized in that said solvent is chosen from the group consisting of propylene carbonate, dioxolane, dimethoxyethane, nitromethane, tetrahydrofurane and the cyclic esters and ethers and mixtures thereof.

10. A process for preparing a generator according to one of claims 1 to 9, characterized in that in order to obtain the positive electrode, said compound in powder form is dispersed in an emulsion of polytetrafluorethylene in a ratio of 85 to 95 percent by weight in 15 to 5 % of PTFE, that alcohol is added to the emulsion in order to form a consolidated mass, and that this mass is compressed on said conductive support.

11. A process for preparing a generator according to one of the claims 1 to 9, characterized in that in order to prepare the positive electrode, a gel is formed by mixing said compound with polyvinyl formal dissolved in propylene carbonate.

## Ansprüche

1. Elektrochemischer Generator mit einer positiven Elektrode, deren aktive Masse (5) die aktive negative Masse dynamisch einfügen kann, einer negativen Elektrode, deren aktive Masse mindestens ein Alkalimetall aufweist, und mit einem nichtwässrigen Elektrolyten (6), dadurch gekennzeichnet, daß die positive Elektrode mindestens eine Verbindung der allgemeinen Formel $MX_4R_nT_p$ aufweist, in der M ein Element darstellt, das unter Silicium, Germanium, Zinn und Blei ausgewählt wird, X Schwefel, Selen oder Tellur darstellt, R und T je eines der Elemente darstellen, das unter Kupfer, Silber, Mangan, Eisen, Kobalt und Nickel ausgewählt wird, wobei n größer oder gleich 0 und kleiner oder gleich 4 ist und p größer oder gleich 0 oder kleiner oder gleich 2 ist.

2. Generator nach Anspruch 1, dadurch gekennzeichnet, daß die Verbindung aus der Gruppe ausgewählt wird, die $Fe_2SiS_4$, $Fe_2GeS_4$, $Cu_2Fe_2SnS_4$, $Fe_2SnS_4$, $Cu_2MnSnS_4$, $Cu_4SnS_4$ und deren Mischungen enthält.

3. Generator nach einem der Ansprüche 1 oder 2, dadurch gekennzeichnet, daß die Verbindung auf einem leitenden Träger angeordnet ist.

4. Generator nach einem der Ansprüche 1 oder 2, dadurch gekennzeichnet, daß die Verbindung mit einem leitenden Pulver vermischt ist, das eine Substanz aufweist, die aus Acetylenruß, Graphit oder ihren Mischungen ausgewählt wird.

5. Generator nach einem der vorstehenden Ansprüche, dadurch gekennzeichnet, daß das Alkalimetall Lithium ist.

6. Generator nach Anspruch 5, dadurch gekennzeichnet, daß das negative aktive Material auf einen leitenden Träger, vorzugsweise aus Kupfer oder Nickel, aufgebracht ist.

7. Generator nach einem der vorstehenden Ansprüche, dadurch gekennzeichnet, daß der Elektrolyt einen in einem Lösungsmittel aufgelösten ionischen Träger enthält.

8. Generator nach Anspruch 7, dadurch gekennzeichnet, daß das Kation des ionischen Trägers das Kation des Elements der negativen Elektrode ist, während das Anion vorzugsweise ein Halogenid, ein Sulfat, ein Nitrat, ein Perchlorat oder ein Phosphorhalogenid ist.

9. Generator nach Anspruch 7, dadurch gekennzeichnet, daß das Lösungsmittel aus der Gruppe Propylencarbonat, Dioxolan, Dimethoxyäthan, Nitromethan, Tetrahydrofuran, den zyklischen Estern und Äthern und Mischungen davon ausgewählt wird.

10. Verfahren zur Herstellung eines Generators nach einem der Ansprüche 1 bis 9, dadurch gekennzeichnet, daß man zur Herstellung der positiven Elektrode die genannte Verbindung in Pulverform in einer Polytetrafluoräthylenemulsion dispergiert, in einem Verhältnis von 85 bis 95 Gew.% zu 15 bis 5 Gew.% PTFE, dann Alkohol der Emulsion hinzufügt, um eine verfestigte Masse zu bilden, und diese Masse auf dem leitenden Träger komprimiert.

11. Verfahren zur Herstellung eines Generators nach einem der Ansprüche 1 bis 9, dadurch gekennzeichnet, daß zur Herstellung der positiven Elektrode ein Gel durch Mischen der Verbindung mit Polyvinylformal, gelöst in Propylencarbonat, gebildet wird.

# FIG. 1

# FIG. 2